(19) Europäisches Patentamt
European Patent Office
Office européen des brevets

(11) **EP 0 725 996 B1**

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(21) Anmeldenummer: **93909994.1**

(22) Anmeldetag: **14.05.1993**

(51) Int Cl.⁶: **H02P 7/00**

(86) Internationale Anmeldenummer:
**PCT/EP93/01212**

(87) Internationale Veröffentlichungsnummer:
**WO 93/23920 (25.11.1993 Gazette 1993/28)**

(54) **STEUERSCHALTUNG**

CONTROL CIRCUIT

CIRCUIT DE COMMANDE

(84) Benannte Vertragsstaaten:
**DE FR GB IT**

(30) Priorität: **15.05.1992 DE 4216203**

(43) Veröffentlichungstag der Anmeldung:
**14.08.1996 Patentblatt 1996/33**

(73) Patentinhaber: **SGS-THOMSON MICROELECTRONICS GMBH 85630 Grasbrunn (DE)**

(72) Erfinder: **HRASSKY, Petr D-8090 Wasserburg am Inn (DE)**

(74) Vertreter: **Klunker . Schmitt-Nilson . Hirsch Winzererstrasse 106 80797 München (DE)**

**Beschreibung**

Die Erfindung betrifft eine Steuerschaltung, insbesondere für eine Gleichstrommotor-Steuerung in Positioniersystemen, gemäß dem Oberbegriff des Patentanspruches 1.

Eine derartige Steuerschaltung ist bekannt aus der Druckschrift Siemens Components 27 (1989), Heft 2, Seiten 79-82.

Mit Gleichstrommotoren ausgerüstete Positioniersysteme werden häufig eingesetzt, um eine mechanische Größe, beispielsweise eine Linearbewegung oder eine Kippbewegung, einer einstellbaren elektrischen Spannung nachzuführen.

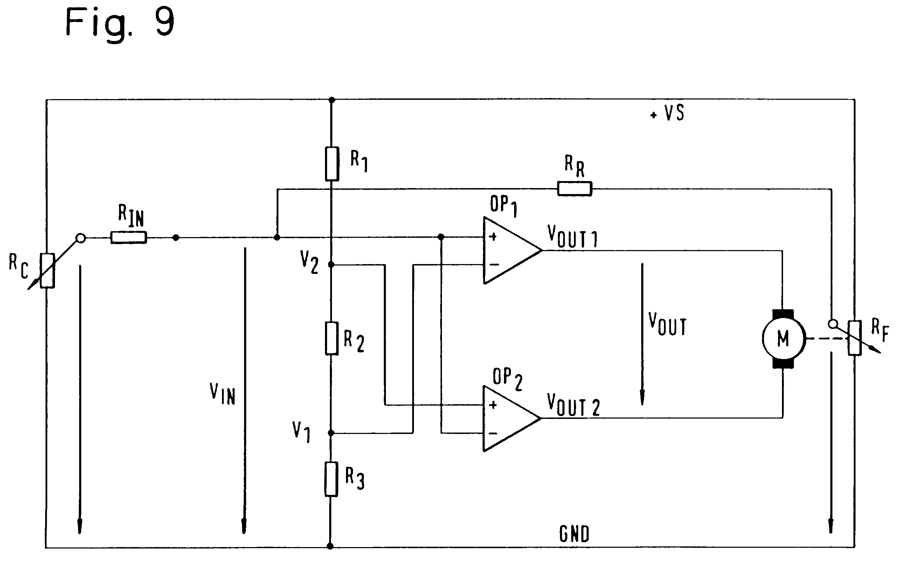

**Fig. 9** zeigt eine Steuerschaltung für Positioniersysteme mit Gleichstrommotoren nach dem Stand der Technik. Der zu steuernde Gleichstrommotor wird zwischen den Ausgang eines ersten Operationsverstärkers OP1 und den Ausgang eines zweiten Operationsverstärkers OP2 geschaltet. Ein aus einem ersten Spannungsteilerwiderstand $R_1$, einem zweiten Spannungsteilerwiderstand $R_2$ und einem dritten Spannungsteilerwiderstand $R_3$ gebildeter Spannungsteiler ist zwischen eine Versorgungsspannung $V_S$ und ein Bezugspotential GND geschaltet. Der invertierende Eingang des ersten Operationsverstärkers OP1 ist an den Verbindungspunkt zwischen dem zweiten Spannungsteilerwiderstand $R_2$ und dem dritten Spannungsteilerwiderstand $R_3$ geschaltet. Der nichtinvertierende Eingang des zweiten Operationsverstärkers ist an den Verbindungspunkt zwischen den ersten Spannungsteilerwiderstand $R_1$ und den zweiten Spannungsteilerwiderstand $R_2$ geschaltet. Der nichtinvertierende Eingang des ersten Operationsverstärkers OP1 ist mit dem invertierenden Eingang des zweiten Operationsverstärkers OP2 verbunden; den beiden letztgenannten Eingängen wird eine Eingangsspannung $V_{IN}$ zugeführt. Zwischen die Ausgänge der beiden Operationsverstärker ist ein Gleichstrommotor geschaltet. Mit diesem mechanisch gekoppelt ist ein Potentiometer $R_F$, mit dem der Istwert der Motordrehstellung erfaßt wird. Dieser Istwert wird über einen Rückkopplungswiderstand $R_R$ auf einen Eingang des Operationsverstärkers OP1 zurückgeführt. Dieser Eingang ist außerdem über einen Widerstand $R_{IN}$ mit dem Abgriff eines Sollwert-Potentiometers $R_C$ verbunden.

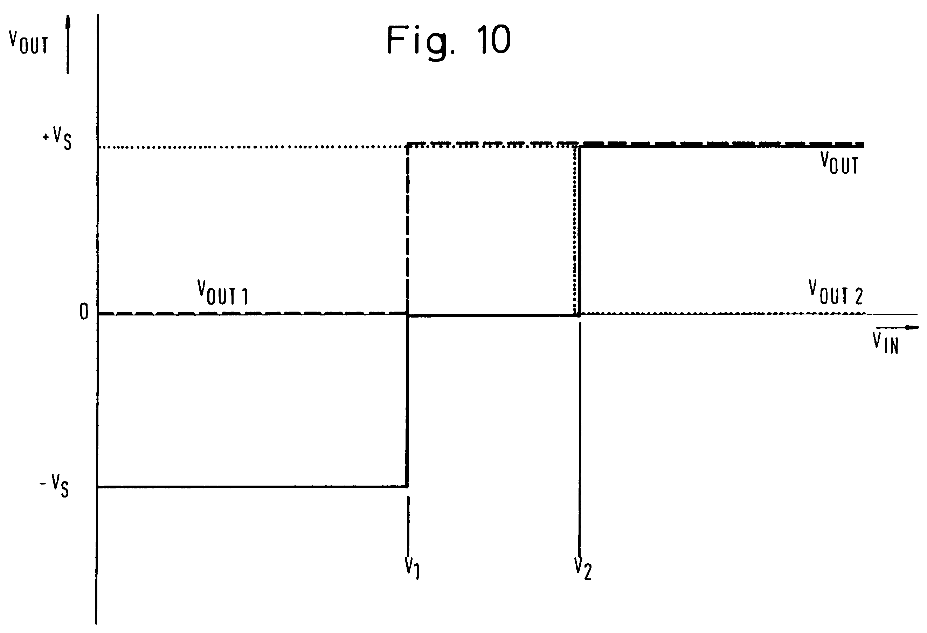

**Fig. 10** zeigt eine Übertragungsfunktion dieser bekannten Schaltung nach **Fig. 9**. Auf der Abszisse ist die Eingangsspannung $V_{IN}$ aufgetragen, wohingegen auf der Ordinate die Differenz-Ausgangsspannung $V_{OUT}$ aufgetragen ist. Bei einer Eingangsspannung von $V_{IN}$ kleiner als $V_1$ ist die Differenz-Ausgangsspannung $V_{OUT}$ negativ und entspricht dem Betrag nach praktisch der Versorgungsspannung $V_S$. Dadurch dreht sich der Motor in einer ersten Richtung, beispielsweise rechtsdrehend. Wird die Eingangsspannung $V_{IN}$ kontinuierlich erhöht, bis sie einen Schwellenwert $V_1$ überschreitet, der dem Potential an der Verbindungsstelle zwischen den Widerständen $R_2$ und $R_3$ entspricht, geht die Differenz-Ausgangsspannung $V_{OUT}$ auf den Wert von Null Volt über. Der Motor bleibt stehen. Wird bei einer weiteren Erhöhung der Eingangsspannung ein Schwellenwert $V_2$ überschritten, der dem Potential an der Verbindungsstelle zwischen den Widerständen $R_1$ und $R_2$ entspricht, steigt die Differenz-Ausgangsspannung $V_{OUT}$ auf einen positiven Wert an, der praktisch dem Betrag der Versorgungsspannung $V_S$ entspricht. Der Motor dreht sich dann in einer zweiten Drehrichtung, bei dem angenommen Beispiel linksdrehend.

Ein Problem der in **Fig. 9** dargestellten Schaltung ist, daß sie sich im Bereich der Schwellenwerte $V_1$, $V_2$ linear verhält und daher in der praktischen Realisierung eine Ausgangskompensationsschaltung (Boucherot-Glied) benötigt. Weiterhin reagiert diese Schaltung auf der Eingangsspannung überlagerte Störspannungen empfindlich, insbesondere, wenn sich $V_{IN}$ nach dem Stehenbleiben des Motors dicht neben einem der Schwellwerte $V_1$ und $V_2$ befindet.

Gewünscht ist eine Steuerschaltung, die in den Schaltschwellen $V_1$ und $V_2$ Hysterese aufweist und auch Differenz-Signale verarbeiten kann.

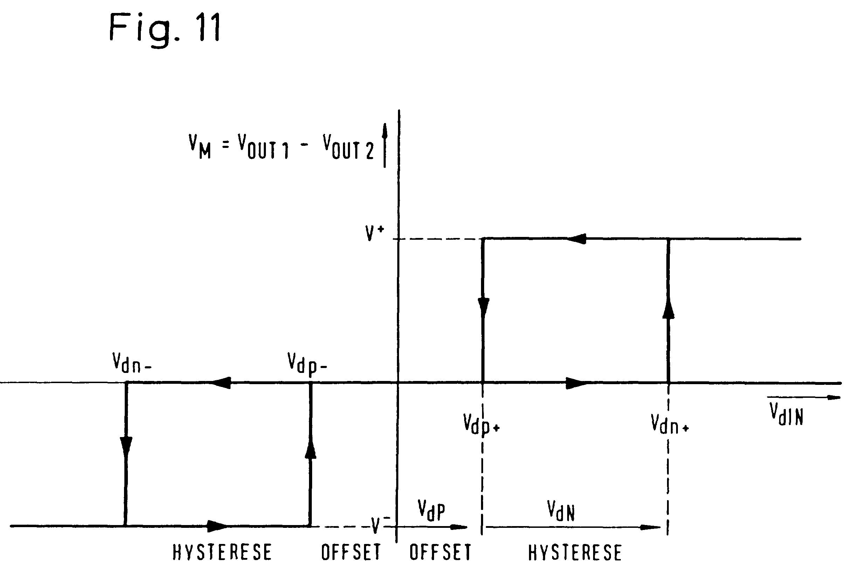

Eine derartige Steuerschaltung, die für die Positioniersteuerung, z.B. mit Gleichstrommotoren, geeignet ist, weist eine Übertragungskennlinie auf, wie sie in **Fig. 11** gezeigt ist. Demnach bestehen drei verschiedene Ausgangszustände: positive Ausgangsspannung, die beispielsweise zu Linkslauf des Motors führt; Ausgangsspannung Null, bei welcher der Motor kurzgeschlossen ist und die daher einen Stop-Zustand bedeutet; negative Ausgangsspannung, die bei dem betrachteten Beispiel zu einem Rechtslauf des Motors führt. Die Eingangsspannungen sind die Soll- und Ist-Spannungen des Positioniersystems. Die Eingangsspannungsdifferenz $V_{dIN}$ ist die Differenz dieser Spannungen.

Die Funktion der Steuerschaltung und die Störunempfindlichkeit des Positioniersystems können aus der Form der in **Fig. 11** gezeigten Übertragungskennlinie erklärt werden. Bei einer negativen Eingangsspannungsdifferenz $V_{dIN} < V_{dn-}$ wird der Motor mit einer negativen Spannung beaufschlagt und dreht sich nach rechts. Dabei erhöht sich die Eingangsspannungsdifferenz, bei Erreichen der Schwelle $V_{dp}$-wird die Ausgangsspannung der Komparatorschaltung zu Null und der Motor wird in der erreichten Position angehalten. Die Positioniergenauigkeit ist bestimmt durch die erreichte Differenz $V_{dP}$ der Soll- und Ist-Spannungen.

$$V_{dp-} \leq V_{dP} \leq V_{dp+}.$$

Beim Erreichen des Stop-Zustandes bleibt der Motor solange gebremst, wie $V_{dIN}$ einen der Schwellenwerte $V_{dn-}$

oder $V_{dn+}$ nicht überschritten hat. Der Abstand zwischen den Schwellen $V_{dn-}$ und $V_{dp-}$ einerseits und zwischen den Schwellen $V_{dn+}$ und $V_{dp+}$ (Hysterese) andererseits bestimmt die Störunempfindlichkeit des Positioniersystems. Eine der Ist- oder der Soll-Eingangsspannung überlagerte Störspannung mit einer Amplitude bis zu $V_{dN} \leq V_{dN+}$ - $V_{dp+}$ kann ohne Einfluß auf die erreichte MotorPosition vertragen werden, wenn man den positiven Bereich von $V_{dIN}$ betrachtet. Für den negativen Bereich gilt entsprechendes, wenn man annimmt, daß das Verhalten hinsichtlich Offset und Hysterese im negativen und im positiven Bereich gleich ist.

Es ist daher eine Aufgabe der Erfindung, eine Steuerschaltung nach dem Oberbegriff des Hauptanspruches verfügbar zu machen, die kostengünstig integriert werden kann und dabei das gewünschte Übertragungsverhalten gemäß **Fig. 11** aufweist.

Eine Lösung dieser Aufgabe ist in Patentanspruch 1 angegeben und kann gemäß den Unteransprüchen vorteilhaft weitergebildet werden.

Die erfindungsgemäße Schaltung verfügt über einen analogen Differenzeingang mit einem großen Gleichtaktbereich. Die für die Verwirklichung der gewünschten Übertragungskennlinie notwendige Eingangs-Offsetspannungen werden intern in den Differenzeingangsstufen der Hysterese-Komparatoren erzeugt. Die gewünschte Übertragungskennlinie gemäß Fig. 11 wird durch die Beschaltung der Komparatoreingänge und die Anpassung der Übertragungsfunktion der weiteren Schaltungsteile realisiert.

Die mit der Erfindung erzielten Vorteile bestehen insbesondere darin, daß durch sie eine Steuerschaltung, insbesondere für eine Gleichstrommotor-Steuerung in Positioniersystemen, verfügbar wird, die auch in einer durch elektromagnetische Störfelder beeinflußten Umgebung, beispielsweise in einem Kraftfahrzeug, eingesetzt werden kann. Darüber hinaus wird eine Steuerschaltung, insbesondere für eine Gleichstrommotor-Steuerung in Positioniersystemen, verfügbar, die mit einer geringen Anzahl von Komponenten insbesondere auch als Integrierte Schaltung (IC) realisiert werden kann.

Weitere Vorteile und Ausgestaltungen sind den Ausführungsbeispielen zu entnehmen.

Eine bevorzugte Ausführungsform der Erfindung verwendet einen Hysteresekomparator, bei dem sich mit einer sehr geringen Anzahl von Bauelementen und daher mit geringem Chip-Flächenbedarf im Fall der monolithischen Integration sowohl die Hystereseals auch die Offset-Werte problemlos einstellen lassen.

Aus der Druckschrift Siemens Components 27 (1989), Heft 2, Seiten 79 - 82, ist eine integrierte Treiberschaltung für querstromfreie Vollbrücken-Stromversorgung für Elektromotoren bekannt, bei der jede Halbbrücke über einen eigenen Steuereingang digital angesteuert wird und von jedem Steuereingang ein getrennter Steuerzweig zu der je zugehörigen Halbbrücke führt, wobei jedem Steuereingang ein eigenes Hystereseglied in Form eines Schmitt-Triggers zur eindeutigen Erzeugung eines digitalen Steuersignals für die Brückenschaltung folgt. Mit den Hysteresegliedern ist aber keine Differenzschaltung gebildet. Das heißt, es ist auf der Steuereingangsseite für jeden von zwei Steuersignaleingängen ein Eingangs-Schmitt-Trigger vorgesehen, um auch bei gestörten digitalen Eingangssignalen ein möglichst eindeutiges Schaltverhalten der Steuerschaltung zu erreichen. Die beiden Steuersignaleingänge dienen der getrennten Zuführung von Steuersignalen für die Steuerung des einen bzw. des anderen Brückenzweiges einer einen Gleichstrommotor treibenden Vollbrückenschaltung. Es findet aber kein Differenzschaltungsbetrieb statt, wie es für die Steuerschaltung der vorliegenden Erfindung wesentlich ist.

Bei der aus der Druckschrift EPE Proceedings, 1991, Vol. 3, Seiten 3 - 562 bis 3-567, bekannten Steuerschaltung für eine für vier Quadranten getaktete Motorsteuerung ist jedem Komparator eine gesonderte eigene Referenzspannungsquelle zugeordnet. Die Referenzspannungen sind so bemessen, daß das gewünschte Vier-Quadranten-Verhalten erreicht werden kann. Jedem der vier Komparatoren wird über seine zugehörige Referenzspannungsquelle von außen ein Offset vorgegeben. Durch die Hysterese dieser Komparatoren ist der strommäßige Hub der realisierten getakteten Stromsteuerung bestimmt.

Die Erfindung wird im folgenden anhand mehrerer Ausführungsbeispiele erläutert. Es zeigen:

**Fig. 1**     ein Schaltbild einer allgemeinen Ausführungsform einer erfindungsgemäßen Steuerschaltung;

**Fig. 2**     Übertragungsfunktionen im Zusammenhang mit einer ersten Ausführungsform (**Fig. 2A)** bzw. einer zweiten Ausführungsform (**Fig. 2B)** der erfindungsgemäßen Lösung;

**Fig. 3**     ein Prinzipschaltbild einer ersten Ausführungsform einer erfindungsgemäßen Steuerschaltung nach **Fig. 1**;

**Fig. 4**     ein Prinzipschaltbild einer Steuerlogik und einer Vollbrücke einer zweiten Ausführungsform einer erfindungsgemäßen Steuerschaltung nach **Fig. 1**;

**Fig. 5**     ein Schaltbild einer ersten Applikation einer erfindungsgemäßen Steuerschaltung;

**Fig. 6**     ein Schaltbild einer zweiten Applikation einer erfindungsgemäßen Steuerschaltung;

**Fig. 7** ein Schaltbild, das ein Ausführungsbeispiel für den grundsätzlichen Aufbau jedes der Hysteresekomparatoren in den **Fig. 1** und **4** veranschaulicht;

**Fig. 8** ein Schaltbild, in dem Einzelheiten des in **Fig. 7** gezeigten Hysteresekomparators gezeigt sind;

**Fig. 9** ein Positioniersystem mit Gleichstrommotor nach dem Stand der Technik;

**Fig. 10** eine Übertragungsfunktion der bekannten Schaltung gemäß **Fig. 9**; und

**Fig. 11** eine Übertragungsfunktion bekannter Art mit Hystereseverhalten.

**Fig. 11** zeigt ein Diagramm einer an sich bekannten Übertragungsfunktion mit Hystereseverhalten, die eine Ausgangsbasis für die Erfindung bildet. Auf der Ordinate ist die Differenz $V_M$ der Ausgangsspannungen $V_{OUT1}$ und $V_{OUT2}$ einer Steuerschaltung in Abhängigkeit von der auf der Abszisse aufgetragenen Differenz $V_{dIN}$ der Eingangsspannungen IN1 und IN2 einer Steuerschaltung dargestellt. Bei einem Wert der Differenzspannung $V_{dIN} = 0$ V beträgt die Differenz $V_M$ der Ausgangsspannung $V_M = 0$ V. Wird die Differenzspannung $V_{dIN}$ ausgehend von Null Volt allmählich erhöht, so steigt die Differenz $V_M$ der Ausgangsspannungen bei einem vorbestimmten Wert $V_{dIN} = V_{dn+}$ von $V_M = 0$ V auf einen positiven Spannungspegel $V^+$ an. Wenn danach die Differenzspannung $V_{dIN}$ wieder allmählich vermindert wird, so springt die Differenz $V_M$ der Ausgangsspannungen bei einem Wert $V_{dIN} = V_{dp+}$ von $V_M = V^+$ auf Null Volt. Wird die Differenzspannung $V_{dIN}$ ausgehend von Null Volt allmählich vermindert, so springt die Differenz $V_M$ der Ausgangsspannungen bei einem Wert $V_{dIN} = V_{dn-}$ von $V_M = 0$ V auf einen negativen Spannungspegel $V^-$. Wenn danach die Differenzspannung $V_{dIN}$ wieder allmählich erhöht wird, springt die Differenz $V_M$ der Ausgangsspannungen bei einem vorbestimmten Wert $V_{dIN} = V_{dp-}$ von $V_M = V^-$ auf Null Volt.

Im folgenden wird die Funktion einer Steuerschaltung mit der beschriebenen Übertragungsfunktion in einem Positioniersystem beschrieben. Bei einer negativen Differenzspannung $V_{dIN}$ mit $V_{dIN} < V_{dn-}$ wird somit der Motor mit einer negativen Spannung beaufschlagt und dreht sich beispielsweise nach rechts. Dabei erhöht sich die Differenzspannung $V_{dIN}$. Beim Erreichen der Schwelle $V_{dp-}$ wird die Ausgangsspannung zu Null und der Motor wird in der erreichten Position angehalten. Dieser Zustand bleibt erhalten, bis die Differenzspannung $V_{dIN}$ einen der Schwellenwerte $V_{dn-}$ oder $V_{dn+}$ passiert. Der Abstand zwischen den Schwellen $V_{dn-}$ und $V_{dp-}$ einerseits und $V_{dn+}$ und $V_{dp+}$ andererseits (Hysterese) bestimmt die Störunempfindlichkeit des Systems. Eine der Eingangsspannung überlagerte Störspannung $V_{dN}$ mit einer Amplitude von $VdN < V_{dn+} - V_{dp+}$ wird ohne Einfluß auf die Motorposition vertragen. Für den negativen Bereich von $V_{dIN}$ gilt wieder entsprechendes.

Für das Spannungsintervall zwischen den Werten $V_{dp-}$ und $V_{dp+}$ für die Differenzspannung $V_{dIN}$ wird der zu steuernde Gleichstrommotor kurzgeschlossen, um das Nachlaufen zu verkürzen.

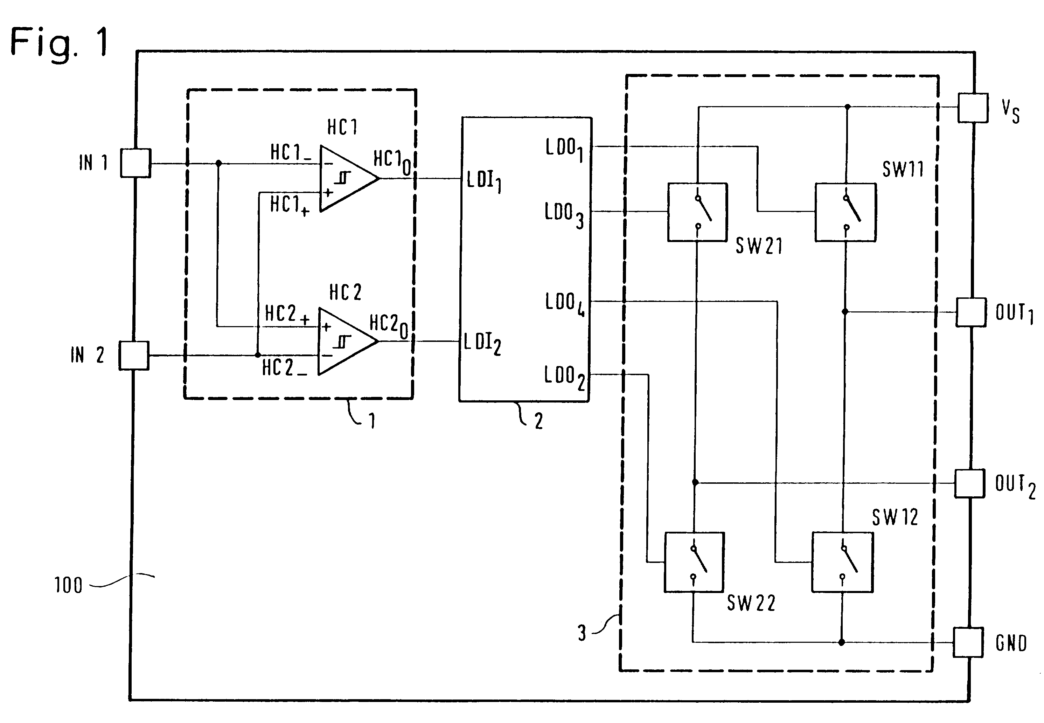

**Fig. 1** zeigt ein Schaltbild einer allgemeinen Ausführungsform einer erfindungsgemäßen Steuerschaltung 100 mit einer Differenzschaltung 1, einer Steuerlogik 2 und einer Vollbrücke 3. Ein erster Analogeingang IN1 der Steuerschaltung 100 ist direkt an einen ersten Differenzeingang $HC1_-$ eines ersten Hysteresekomparators HC1 sowie an einen zweiten Differenzeingang $HC2_+$ eines zweiten Hysteresekomparators HC2 der Differenzschaltung 1 geschaltet. Ein zweiter Analogeingang IN2 der Steuerschaltung 100 ist direkt an einen zweiten Differenzeingang $HC1_+$ des ersten Hysteresekomparators HC1 sowie an einen ersten Differenzeingang $HC2_-$ des zweiten Hysteresekomparators HC2 geschaltet. Der Steuerlogik 2 mit einem ersten Eingang $LDI_1$, einem zweiten Eingang $LDI_2$, einem ersten Ausgang $LDO_1$, einem zweiten Ausgang $LDO_2$, einem dritten Ausgang $LDO_3$ und einem vierten Ausgang $LDO_4$ folgt die zwischen eine Versorgungsspannung $V_S$ und ein Bezugspotential GND geschaltete Vollbrücke 3 aus einer ersten Halbbrücke mit einer ersten und einer zweiten über jeweils einen Steuereingang steuerbaren Schaltereinrichtung SWll, SW12 und einer zweiten Halbbrücke mit einer dritten und einer vierten über jeweils einen Steuereingang steuerbaren Schaltereinrichtung SW21, SW22, wobei ein Ausgang $HC1_O$ des ersten Hysteresekomparators HC1 unmittelbar an den ersten Logikeingang $LDI_1$ der Steuerlogik 2 geschaltet ist. Entsprechend ist ein Ausgang $HC2_O$ des zweiten Hysteresekomparators HC2 unmittelbar an den zweiten Logikeingang $LDI_2$ der Steuerlogik 2 geschaltet. Weiterhin sind der erste, zweite, dritte und vierte Ausgang $LDO_1$, $LDO_2$, $LDO_3$, $LDO_4$ der Steuerlogik 2 jeweils an den Steuereingang der ersten, zweiten, dritten bzw. vierten steuerbaren Schaltereinrichtung SW11, SW12, SW21, SW22 geschaltet.

Ein erster Steuerschaltungs-Ausgang OUT1 ist an den Brückenabgriff der ersten Halbbrücke SW11, SW12 und ein zweiter Steuerschaltungs-Ausgang OUT2 ist an den Brückenabgriff der zweiten Halbbrücke SW21, SW22 geschaltet. Jede der steuerbaren Schaltereinrichtungen SW11, SW12, SW21, SW22 ist mit ihrer Schaltstrecke in einen leitenden oder in einen sperrenden Schaltzustand steuerbar, je nachdem, ob der zugehörige Steuereingang auf einem ersten oder auf einem zweiten Potential liegt.

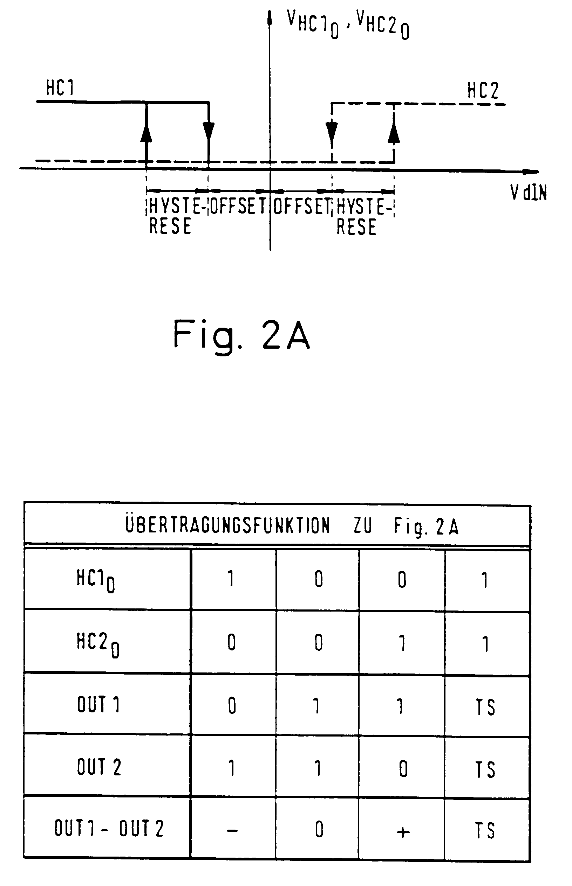

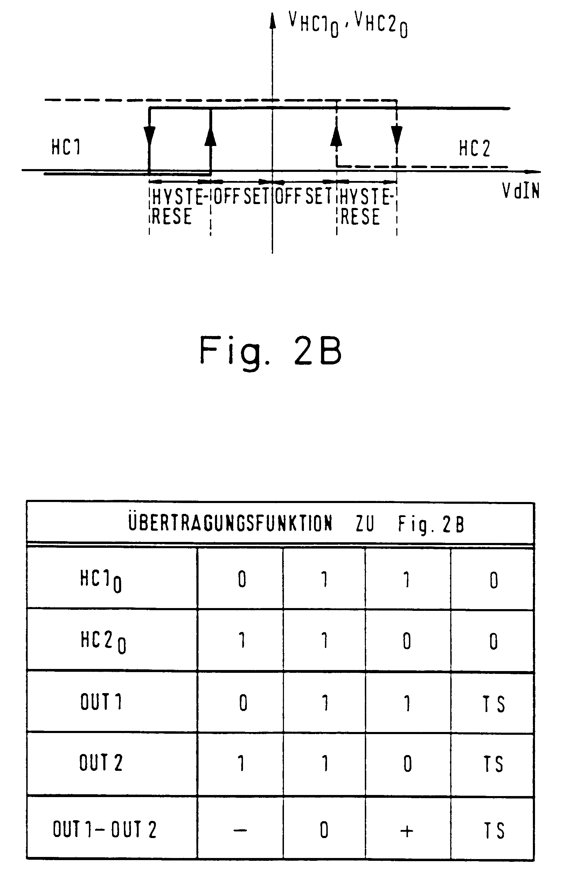

Die Komparatorschaltung 1 kann auf unterschiedliche Übertragungsfunktionen ausgelegt werden, die von dem hysteresebehafteten Schaltverhalten eines jeden der beiden Hysteresekomparatoren HC1 und HC2 sowie von deren Zusammenwirken abhängen. In den **Fig. 2A und 2B** sind zwei unterschiedliche Beispiele solcher Übertragungsfunktionen dargestellt. Dabei ist die Übertragungsfunktion des Hysteresekomparators HC1 jeweils mittels durchgezogenen Linien dargestellt, während das Übertragungsverhalten des Hysteresekomparators HC2 jeweils mittels gestrichelter Linien dargestellt ist. Gezeigt ist jeweils die Ausgangsspannung $V_{HC10}$ des Hysteresekomparators HC1 bzw. die Ausgangsspannung $V_{HC20}$ des Hysteresekomparators HC2 in Abhängigkeit von der Eingangsspannung $V_{dIN}$.

Die unterschiedlichen Übertragungsfunktionen gemäß den **Fig. 2A** und **2B** kommen zustande, wenn man die eingangsseitige Beschaltungsweise der Komparatorschaltung 1 gegenüber der in **Fig. 1** gezeigten Beschaltungsweise ändert. **Fig. 2A** zeigt die Übertragungsfunktion bei der Beschaltung der Komparatorschaltung 1 gemäß **Fig. 1**. Vertauscht man bei beiden Hysteresekomparatoren HC1, HC2 die beiden Eingänge, kommt es zu einer Übertragungsfunktion gemäß **Fig. 2B**.

Die unterschiedlichen Übertragungskennlinien verschieden gestalteter Komparatorschaltungen 1 bedingen unterschiedlich wirkende Ausführungsformen der aus Steuerlogik 2 und Vollbrücke 3 gebildeten Ausgangsschaltung. Den **Fig. 2A und 2B** ist je eine Übertragungsfunktion beigefügt, welche das Übertragungsverhalten dieser Ausgangsschaltung zeigt, die jeder der in den **Fig. 2A und 2B** gezeigten Übertragungsfunktion zuzuordnen ist, damit sich ein an die Ausgangsanschlüsse OUT1 und OUT2 angeschlossener Motor bei allen Ausführungsformen gleich verhält. In den verschiedenen Übertragungsfunktionstabellen bedeuten:

1: einen ersten Potential- oder Stromzustand

0: einen zweiten Potential- oder Stromzustand

TS: Tri-state-Zustand (hochohmiger Ausgang)

-: Motordrehung in einer ersten Richtung
+: Motordrehung in einer zweiten Drehrichtung

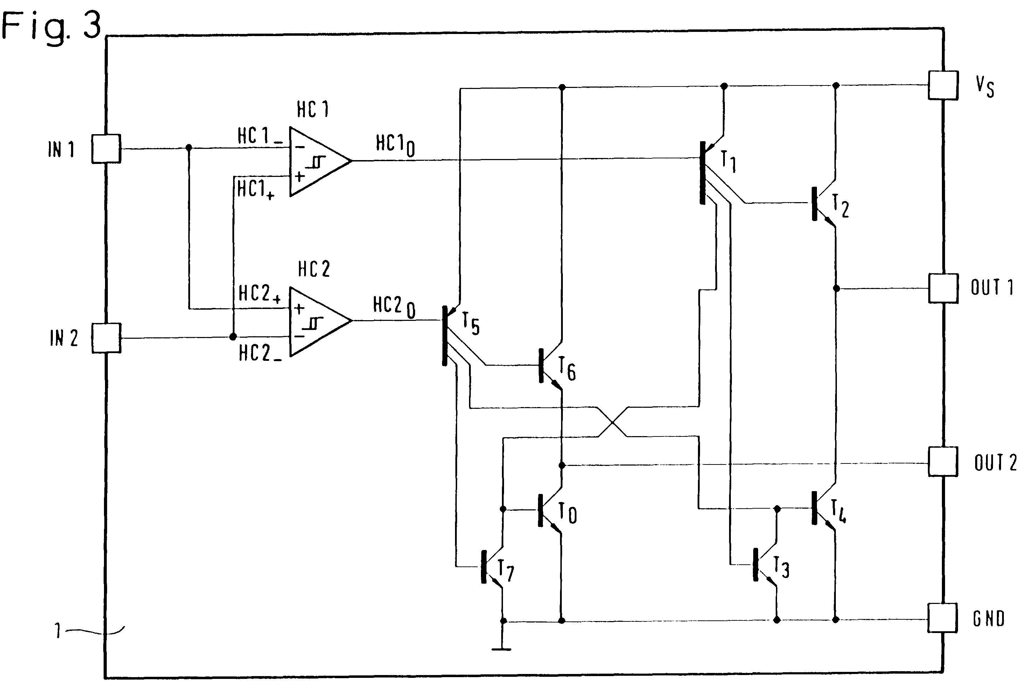

**Fig. 3** zeigt ein detaillierteres Schaltbild einer ersten Ausführungsform einer erfindungsgemäßen Steuerschaltung nach **Fig. 1**, mit der ein Übertragungsverhalten gemäß **Fig. 2A** verwirklicht wird. Die Schaltung der Hysteresekomparatoren HC1 und HC2 entspricht der bereits in **Fig. 1** dargestellten und vorstehend erläuterten Anordnung; auf diese Ausführungen wird Bezug genommen. Die in **Fig. 1** aggregiert dargestellte Vollbrücke 3 aus steuerbaren Schaltereinrichtungen SW11, SW12, SW21, SW22 sowie die dazugehörige Steuerlogik 2 sind in der mit **Fig. 3** gegebenen Darstellung in einer bevorzugten Ausführungsform schaltungstechnisch realisiert. Der ersten, zweiten, dritten und vierten steuerbaren Schaltereinrichtung SW11, SW12, SW21, SW22 in **Fig. 1** entspricht jeweils ein erster, zweiter, dritter bzw. vierter npn-Schalttransistor T2, T4, T6, T8, wobei die Schaltstrecke jeder als Transistor implementierten Schaltereinrichtung jeweils als Kollektor-Emitter-Strecke des jeweiligen Transistors ausgeführt ist. Die dazugehörige Basis dient für den betreffenden Transistor als Steuereingang. Der Steuerlogik 2 entsprechen ein erster pnp-Multikollekor-Transistor T1, ein zweiter pnp-Multikollektor-Transistor T5 sowie ein erster npn-Hilfstransistor T3 und ein zweiter npn-Hilfstransistor T7. Die Kollektor-Emitter-Strecke des ersten npn-Hilfstransistors T3 ist der Basis-Emitter-Strecke des zweiten Schalttransistors T4 parallelgeschaltet. Die Kollektor-Emitter-Strecke des zweiten npn-Hilfstransistors T7 ist der Basis-Emitter-Strecke des vierten Schalttransistors T8 parallelgeschaltet. Die Basis des ersten Schalttransistors T2 ist an einen ersten Kollektor des ersten Multikollektor-Transistors T1 geschaltet. Ein zweiter Kollektor des ersten Multikollektor-Transistors T1 ist an die Basis des ersten Hilfstransistors T3 geschaltet. Die Basis des vierten Schalttransistors T8 ist an einen dritten Kollektor des ersten Multikollektor-Transistors T1 geschaltet. In entsprechender Weise ist die Basis des dritten Schalttransistors T6 an einen ersten Kollektor des zweiten Multikollektor-Transistors T5 geschaltet. Ein zweiter Kollektor des zweiten Multikollektor-Transistors T5 ist an die Basis des zweiten Hilfstransistors T7 geschaltet. Die Basis des zweiten Schalttransistors T4 ist an einen dritten Kollektor des zweiten Multikollektor-Transistors T5 geschaltet.

Die zugehörige Übertragungsfunktionstabelle ist bei **Fig. 2A** gezeigt.

Die in **Fig. 3** dargestellte Schaltung kann ebenso wie die nachstehend erläuterten Ausführungsformen grundsätzlich auch mit Feldeffekttransistoren ausgeführt werden.

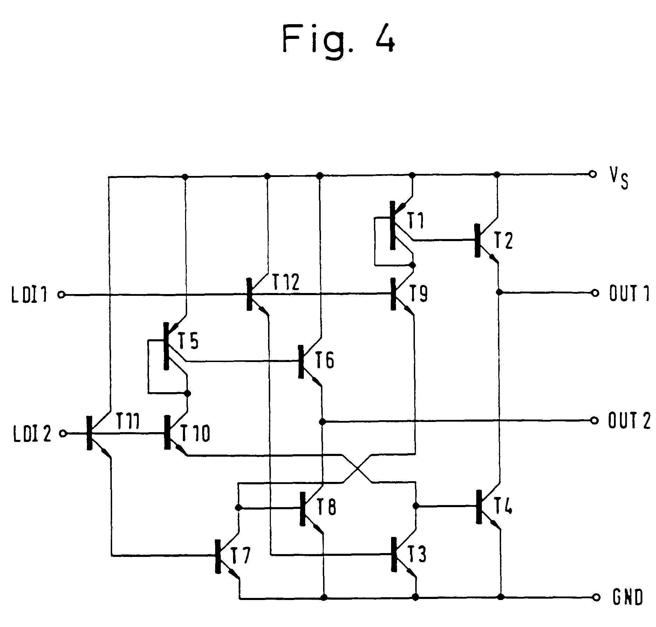

**Fig. 4** zeigt ein detailliertes Schaltbild der Steuerlogik 2 sowie der Vollbrücke 3 einer zweiten Ausführungsform einer erfindungsgemäßen Steuerschaltung nach **Fig. 1**, mit der ein Übertragungsverhalten der der **Fig. 2B** beigefügten Übertragungsfunktionstabelle verwirklicht wird. Die Schaltung der Hysteresekomparatoren HC1 und HC2 entspricht der bereits in **Fig. 1** dargestellten und vorstehend erläuterten Anordnung; auf diese Ausführung wird Bezug genommen. Die in **Fig. 1** aggregiert dargestellte Vollbrücke aus steuerbaren Schaltereinrichtungen SW11, SW12, SW21, SW22 sowie die dazugehörige Steuerlogik 2 sind in der mit **Fig. 4** gegeben Darstellung in einer bevorzugten Ausführungsform schaltungstechnisch realisiert. Der ersten, zweiten, dritten und vierten steuerbaren Schaltereinrichtung SW11, SW12, SW21, SW22 in **Fig. 1** entspricht jeweils ein erster, zweiter, dritter bzw. vierter npn-Schalttransistor T2, T4, T6 bzw. T8, wobei die Schaltstrecke jeder als Transistor implementierten Schaltereinrichtung jeweils als Kollektor-Emitter-Strecke des jeweiligen Transistors ausgeführt ist. Die dazugehörige Basis dient für den betreffenden Transistor als Steuereingang. Der Steuerlogik 2 entsprechen ein erster pnp-Multikollektor-Transistor T1, ein zweiter pnp-Multikollektor-Transistor T5, ein erster npn-Hilfstransistor T3, ein zweiter npn-Hilfstransistor T7, ein dritter npn-Hilfstransistor T9, ein vierter npn-Hilfstransistor T10 und ein fünfter npn-Hilfstransistor T11. Die Kollektor-Emitter-Strecke des ersten npn-Hilfstransistors T3 ist mit der Basis-Emitter-Strecke des zweiten Schalttransistors T4 parallel geschaltet. Die Kollektor-Emitter-Strecke des zweiten npn-Hilfstransistors T7 ist der Basis-Emitter-Strecke des vierten Schalttransistors T8 parallel geschaltet. Die Basis des ersten Schalttransistors T2 ist an einen ersten Kollektor des ersten Multikollektor-Transistors T1 geschaltet. Die Basis des dritten Schalttransistors T6 ist an einen ersten Kollektor des zweiten Multikollektor-Transistors T5 geschaltet. Die Basis des zweiten Schalttransistors T4 ist an den Emitter des vierten npn-Hilfstransistors T10 geschaltet. Die Basis des vierten Schalttransistors T8 ist an den Emitter des dritten npn-Hilfstransistors T9 geschaltet. Ein zweiter Kollektoranschluß des ersten Multikollektor-Transistors T1 sowie dessen Basis sind an den Kollektor des dritten npn-Hilfstransistors T9 geschaltet. In entsprechender Weise ist auch ein erster Kollektoranschluß sowie der Basisanschluß des zweiten Multikollektor-Transistors T5 an den Kollektor des vierten npn-Hilfstransistors T10 angeschlossen. Die Basis des ersten npn-Hilfstransistors T3 ist an den Emitter des sechsten npn-Hilfstransistors T12 angeschlossen. Die Tabelle neben Fig. 2B zeigt die Wahrheitstabelle der Steuerlogik 2 der zweiten Ausführungsform einer erfindungsgemäßen Steuerschaltung.

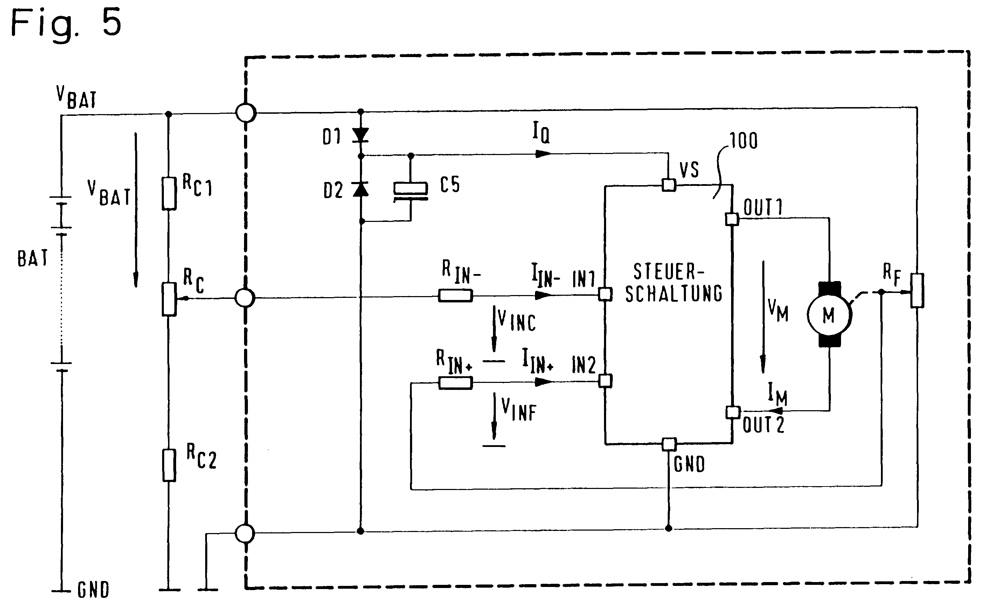

**Fig. 5** zeigt ein Schaltbild einer ersten Applikation der in **Fig. 1** dargestellten allgemeinen Ausführungsform einer erfindungsgemäßen Steuerschaltung 1. Der erste Analogeingang IN1 der Steuerschaltung 100 ist über einen ersten Vorwiderstand $R_{IN-}$ mit dem Schleifkontakt eines ersten Potentiometers $R_C$ verbunden, dessen Endanschlüsse über einen zweiten Vorwiderstand $R_{C1}$ bzw. dritten Vorwiderstand $RC_2$ mit einer Spannungsquelle BAT bzw. mit einem Bezugspotential GND verbunden sind. Ferner wird der Steuerschaltung 100 in üblicher Weise über einen Anschluß VS die Versorgungsspannung $V_{BAT}$ der Spannungsquelle BAT zugeführt. Über einen Anschluß GND ist die Steuerschaltung schließlich an das Bezugspotential angeschlossen. Ein anzusteuernder Gleichstrommotor M ist mechanisch mit einem zwischen die Versorgungsspannung $V_{BAT}$ und das Bezugspotential GND geschalteten zweiten Potentiometer $R_F$ gekoppelt so daß jedem mechanischen Betriebszustand des zu positionierenden Systems eine vorbestimmte Stellung des Schleifers des zweiten Potentiometers $R_F$ entspricht. Der Schleiferabgriff des zweiten Potentiometers $R_F$ ist über einen vierten Vorwiderstand $R_{IN+}$ an den zweiten Steuerschaltungs-Eingang IN2 geschaltet.

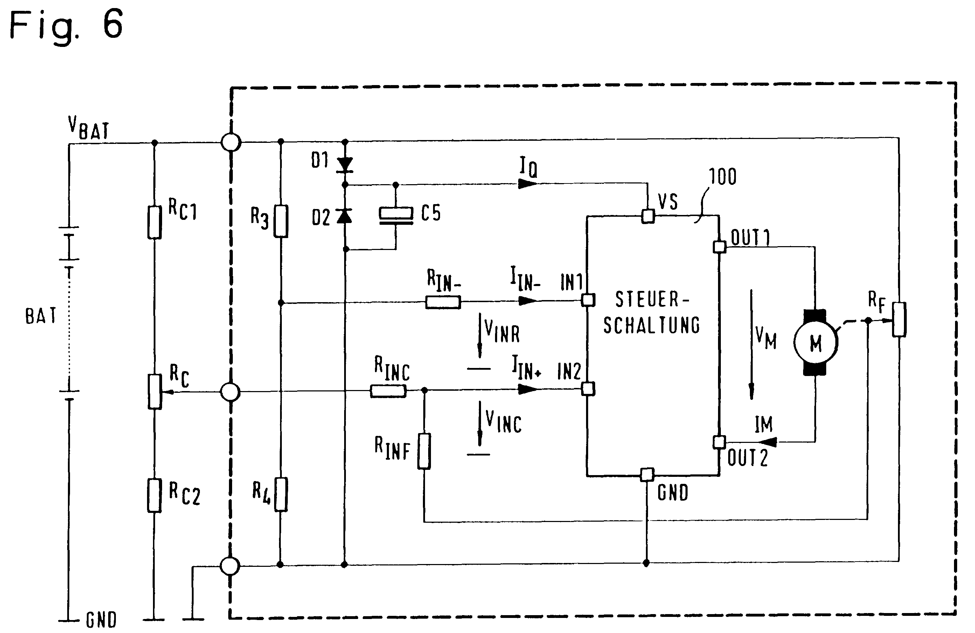

**Fig. 6** zeigt ein Schaltbild einer zweiten Applikation der in **Fig. 1** dargestellten Ausführungsform einer erfindungsgemäßen Steuerschaltung. Der erste Analogeingang IN1 der Steuerschaltung 1 ist über einen ersten Vorwiderstand $R_{IN-}$ mit dem Mittenabgriff eines zwischen die Versorgungsspannung $V_{BAT}$ und das Bezugspotential GND geschalteten Spannungsteilers $R_3$, $R_4$ verbunden. Der zweite Analogeingang IN2 der Steuerschaltung 100 ist über einen fünften Vorwiderstand $R_{INC}$ mit dem Schleifkontakt eines ersten Potentiometers $R_C$ verbunden, dessen Endanschlüsse wiederum über einen zweiten $R_{C1}$ bzw. dritten $R_{C2}$ Vorwiderstand jeweils mit der Spannungsquelle BAT bzw. mit dem Bezugspotential GND verbunden sind. Ferner wird der Steuerschaltung 1 in üblicher Weise über einen Anschluß VS die Versorgungsspannung $V_{BAT}$ der Spannungsquelle BAT zugeführt. Über einen Anschluß GND ist die Steuerschaltung schließlich an das Bezugspotential angeschlossen. Ein anzusteuernder Gleichstrommotor M ist mechanisch mit einem zwischen Versorgungsspannung $V_{BAT}$ und Bezugspotential GND geschalteten zweiten Potentiometer $R_F$ gekoppelt, so daß jedem mechanischen Betriebszustand des zu positionierenden Systems, eine vorbestimmte Stellung des Schleifers des zweiten Potentiometers $R_F$ entspricht. Der Schleiferabgriff des zweiten Potentiometers $R_F$ ist über einen vierten Vorwiderstand $R_{INF}$ an den zweiten Steuerschaltungs-Eingang IN2 geschaltet.

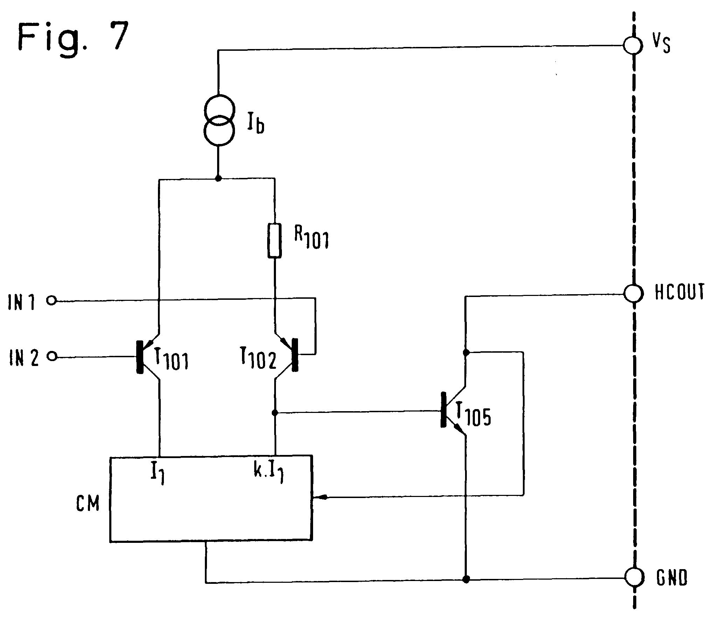

**Fig. 7** zeigt ein Schaltbild, das ein Ausführungsbeispiel für den grundsätzlichen Aufbau jedes der Hysteresekomparatoren HC1 bzw. HC2 in **Fig. 1** veranschaulicht. Die in **Fig. 7** gezeigte Schaltung besteht aus einem unsymmetrischen emittergekoppelten Differenzverstärker (Differenzeingangsstufe) $I_b$, $R_{101}$, $T_{101}$, $T_{102}$ mit einem steuerbaren Stromspiegel CM und einem Auskoppeltransistor $T_{105}$ zum Auskoppeln des Stromspiegelausgangssignals auf einen Komparatorausgang HCOUT und zum Steuern einer Stromspiegelumschaltung.

Das Stromverhältnis k des Stromspiegels CM ist umschaltbar zwischen zwei Werten $k_0$ und $k_1$. Die Eingangsschaltschwellenhysterese ist durch die Umschaltung des Stromverhältnisses des Stromspiegels CM der Differenzeingangsstufe in Abhängigkeit von dem Ausgangszustand dieser Stufe erreicht. Der Betrag der Eingangsschaltschwellenhysterese ist durch den Wert des Vorspann- oder Bias-Stromes ($I_b$) und durch die Differenz der beiden Stromverhältnisse $k_0$ und $k_1$ des Stromspiegels CM bestimmt.

Die Eingangsdifferenz-Offset-Spannung wird durch die unsymmetrische Emitter-Gegenkopplung der Transistoren T101, T102 mittels des Widerstandes R101 erreicht. Bei dieser unsymmetrischen Gegenkopplung ergibt sich eine von dem Bias-Strom und dem Stromverhältnis $k_0$ abhängige Eingangsdifferenz-Offset-Spannung, die durch den Spannungsabfall an dem Widerstand R101 entsteht.

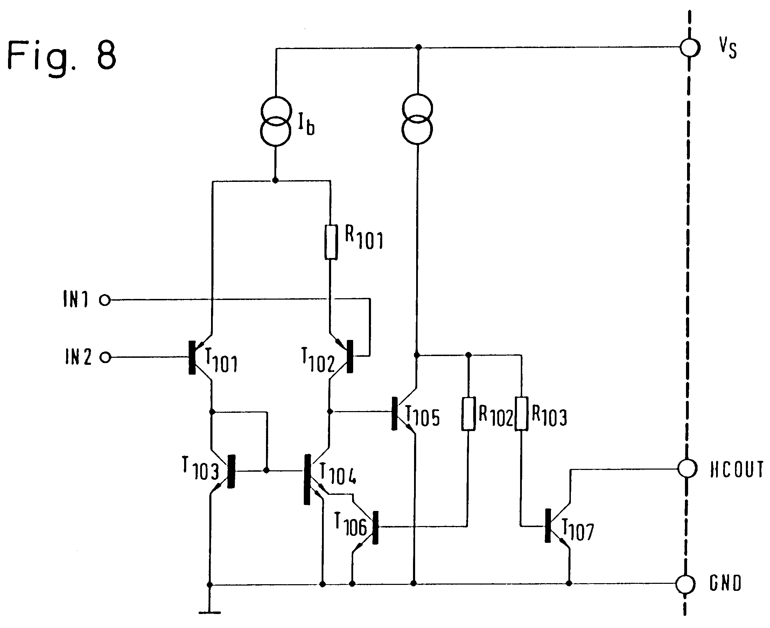

**Fig. 8** zeigt eine Ausführungsform des in **Fig. 7** prinzipiell dargestellten Hysteresekomparators HC1 bzw. HC2. Die in **Fig. 8** gezeigte Schaltung besteht aus einem unsymmetrischen emittergekoppelten Differenzverstärker $I_b$, $R_{101}$, $T_{101}$, $T_{102}$ mit einem steuerbaren Stromspiegel $T_{103}$, $T_{104}$, $T_{106}$ sowie einem Auskoppeltransistor $T_{105}$, der das Ansteuern der Stromspiegelumschaltung bewirkt und einem Stromspiegel-Ausgangstransistor T107.

EP 0 725 996 B1

Bei der in **Fig. 7** dargestellten Ausführungsform kann der Auskoppeltransistor $T_{105}$ bei geeigneter Ausgestaltung der Schaltung auch entfallen. In diesem Fall erfolgt die Stromspiegel-Umschaltung direkt mit einem Ausgangssignal HCOUT.

Der in **Fig. 8** dargestellte steuerbare Stromspiegel CM umfaßt einen ersten npn-Stromspiegel-Transistor $T_{103}$ und einen zweiten, als Multiemittertransistor aufgebauten npn-Stromspiegel-Transistor $T_{104}$. Der Kollektor und die Basis des ersten Stromspiegel-Transistors $T_{103}$ sind miteinander kurzgeschlossen. Der Emitter des ersten Stromspiegel-Transistors $T_{103}$ sowie ein erster Emitter des zweiten Stromspiegel-Transistors $T_{104}$ sind auf das Bezugspotential GND gelegt. Ein zweiter Emitter des zweiten Stromspiegel-Transistors $T_{104}$ ist an den Kollektor eines dritten npn-Stromspiegel-Transistors $T_{106}$ geschaltet. Der Emitter des dritten Stromspiegel-Transistors $T_{106}$ ist auf das Bezugspotential GND gelegt.Der Kollektor des Stromspiegel-Steuertransistors $T_{105}$ ist sowohl über einen Ausgangsstufen-Vorwiderstand $R_{103}$ mit der Basis des Stromspiegel-Ausgangstransistors T107 als auch über einen Schalt-Vorwiderstand $R_{102}$ mit der Basis des dritten Stromspiegel-Transistors $T_{106}$ verbunden. Die Basis des Stromspiegel-Steuertransistors $T_{105}$ ist an den Kollektor des zweiten Stromspiegel-Transistors $T_{104}$ geschaltet, wohingegen dessen Emitter auf das Bezugspotential GND gelegt ist.

Aus schaltungstechnischen Gründen kann auch in den Emitterzweig des Transistors $T_{101}$ ein Widerstand geschaltet werden. In diesem Fall ist die Differenz der beiden Emitterwiderstände für die Eingangsdifferenz-Offset-Spannung und die Eingangsschaltschwellenhysterese bestimmend.

Die Funktion dieser Ausführungsform beruht darauf, daß jeder der Hysteresekomparatoren HC1, HC2 eine umschaltbare Stromspiegelstufe CM mit einem ersten Betriebszustand (Stromverhältnis $k_0$) und mit einem zweiten Betriebszustand (Stromverhältnis $k_1$) aufweist, wobei die Stromspiegelstufe CM ihren Betriebszustand in Abhängigkeit vom Ausgangssignal des Hysteresekomparators HC1, HC2 verändert, und daß die Stromspiegelstufe CM einen Multiemittertransistor $T_{104}$ aufweist, wobei der zweite Emitteranschluß des Multiemittertransistors $T_{104}$ in Abhängigkeit des Ausgangssignals des Transistors $T_{106}$ auf Masse geschaltet wird.

Der Offset der Schaltschwellen wird durch die Dimensionierung der Stromquelle $I_b$ das Stromverhältnis $k_0$ des Stromspiegels CM und den Widerstand $R_{101}$ bestimmt, wohingegen die Hysterese durch den Bias-Strom ($I_b$), die Differenz der Ströme bei den zwei Stromverhältnissen ($k_0$, $k_1$) des Stromspiegels CM und durch den Widerstand $R_{101}$ bestimmt wird. Das Verhältnis der Stromspiegelströme kann durch die Dimensionierung der Emitterflächen der Emitter der Transistoren $T_{103}$ und $T_{104}$ festgelegt werden.

Durch die beschriebene Ausführungsform der Komparatorschaltung ist die Möglichkeit gegeben, durch die Veränderung des Bias-Stromes $I_b$ gleichzeitig den Offset ($V_{dp-}$, $V_{dp+}$) und die Hysterese ($V_{dn-}$ -$V_{dp-}$, $V_{dn+}$ -$V_{dp+}$) zu verändern. Diese Eigenschaft eröffnet bei der Anwendung insbesondere in einem Positioniersystem die Möglichkeit, sowohl den Rauschunterdrückungsbereich als auch den Positionierbereich des Regelsystems von der Versorgungsspannung abhängig zu realisieren und somit eine von der Versorgungsspannung unabhängige Positioniergenauigkeit zu erreichen. Dadurch wird der Rauschunterdrückungsbereich mit zunehmender Versorgungsspannung in gleichem Maße wie die Störspannungen erhöht und bleibt somit die Störsicherheitsreserve von der Versorgungsspannung unabhängig.

**Patentansprüche**

1.  Steuerschaltung, insbesondere für eine Gleichstrommotor-Steuerung in Positioniersystemen, mit

    -   einer mit Steuersignalen beaufschlagbaren, hysteresebehaftete Komparatoren (HC1, HC2) aufweisenden Eingangsstufe (1),

    -   einer der Eingangsstufe (1) nachgeschalteten Steuerlogik (2),

    -   und einer der Steuerlogik (2) nachgeschalteten Treiberstufe (3),

    **dadurch gekennzeichnet,**
    daß die Eingangsstufe aufweist:

    -   einen Differenzeingang mit einem ersten Eingangsanschluß (IN1) und einem zweiten Eingangsanschluß (IN2)

    -   und zwei offsetbehaftete Hysteresekomparatoren (HC1, HC2) mit je einem ersten Komparatoreingang (HC1-, HC2-), je einem zweiten Komparatoreingang (HC1+, HC2+) und je einem Komparatorausgang (HC1$_o$, HC2$_o$),

    -   wobei die offsetbehafteten Hysteresekomparatoren (HC1, HC2) je eine Differenzeingangskonfiguration aufweisen

7

- und wobei von jedem Komparator (HC1, HC2) einer (HC1-, HC2+) der beiden Komparatoreingänge (HC1-, HC1+, HC2-, HC2+) mit dem einen (IN1) der beiden Eingangsanschlüsse (IN1, IN2) und der andere (HC1+, HC2-) der beiden Komparatoreingänge (HC1-, HC1+, HC2-, HC2+) mit dem anderen (IN2) der beiden Eingangsanschlüsse (IN1, IN2) verbunden ist

- und die Komparatoreingänge (HC1-, HC1+, HC2-, HC2+) der beiden Komparatoren (HC1, HC2) außerdem derart miteinander verbunden sind, daß der invertierende Komparatoreingang (HC1-) des ersten Komparators (HC1) mit dem nicht-invertierenden Komparatoreingang (HC2+) des zweiten Komparators (HC2) und der nicht-invertierende Komparatoreingang (HC1+) des ersten Komparators (HC1) mit dem invertierenden Komparatoreingang (HC2-) des zweiten Komparator (HC2) verbunden ist,

- daß die Steuerlogik (2) zwei Steuerlogikeingänge (LDI1, LDI2) aufweist, die mit je einem der Komparatorausgänge ($HC1_o$, $HC2_o$) verbunden sind,

- daß die Steuerschaltung zwei Steuerschaltungsausgänge (OUT1, OUT2) aufweist,

- und daß entweder der Zusammenhang zwischen dem Zustand des ersten Steuerlogikeingangs "$LDI_1$" sowie des zweiten Steuerlogikeingangs "$LDI_2$" und dem Zustand des ersten Steuerschaltungsausgangs "OUT1" sowie des zweiten Steuerschaltungsausgangs "OUT2" durch folgende Tabelle gegeben ist, wobei "0" für ein erstes elektrisches Spannungspotential, "1" für ein zweites elektrisches Spannungspotential, "$V_S$" für ein im wesentlichen einer Versorgungsspannung entsprechendes Potential und "GND" für ein Bezugspotential steht und wobei "TS" anzeigt, daß der jeweilige Ausgang sich in einem hochohmigen, in Bezug auf sein Potential schwebenden Zustand befindet:

| LDI1: | 1 | 0 | 0 | 1 |
| LDI2: | 0 | 0 | 1 | 1 |
| OUT1: | GND | $V_S$ | $V_S$ | TS |
| OUT2: | $V_S$ | $V_S$ | GND | TS |

oder daß der Zusammenhang zwischen dem Zustand des ersten Steuerlogikeingangs "$LDI_1$" sowie des zweiten Steuerlogikeingangs "$LDI_2$" der Steuerlogik (2) und dem Zustand des ersten Steuerschaltungsausgangs "OUT1" sowie des zweiten Steuerschaltungs-ausgangs "OUT2" durch folgende Tabelle gegeben ist, wobei "0" für ein erstes elektrisches Spannungspotential, "1" für ein zweites elektrisches Spannungspotential, "$V_S$" für ein im wesentlichen einer Versorgungsspannung entsprechendes Potential und "GND" für ein Bezugspotential steht und wobei "TS" anzeigt, daß der jeweilige Ausgang sich in einem hochohmigen, in Bezug auf sein Potential schwebenden Zustand befindet:

| LDI1: | 0 | 1 | 1 | 0 |
| LDI2: | 1 | 1 | 0 | 0 |
| OUT1: | GND | $V_S$ | $V_S$ | TS |
| OUT2: | $V_S$ | $V_S$ | GND | TS |

2. Steuerschaltung nach Anspruch 1,
   **dadurch gekennzeichnet**,

   daß die Treiberstufe eine Brückenschaltung mit einem ersten Brückenzweig (T2, T4) und einem zweiten Brückenzweig (T6, T8) aufweist,

   daß jeder Brückenzweig eine zwischen die beiden Pole (VS, GND) einer Vorspannungsquelle geschalteten Reihenschaltung mit zwei je einen Schaltsteuereingang aufweisenden Schaltereinrichtungen, insbesondere in Form von Schalttransistoren (T2, T4, T6, T8) aufweist

und daß der Verbindungspunkt zwischen den beiden Schaltereinrichtungen (T2, T4) des einen Brückenzweiges mit dem einen Steuerschaltungsausgang (OUT1) und der Verbindungspunkt zwischen den beiden Schaltereinrichtungen (T6, T8) des anderen Brückenzweiges mit dem anderen Steuerschaltungsausgang (OUT2) verbunden ist.

3. Steuerschaltung nach Anspruch 1 oder 2,
**dadurch gekennzeichnet,**

daß die Steuerlogik (2) einen ersten (T5) und einen zweiten (T1) Multikollektortransistor aufweist,

wobei die Basisanschlüsse der beiden Multikollektortransistoren (T5, T1) mit je einem der beiden Steuerlogikeingänge (LDI1, LDI2) verbunden sind

und wobei von jedem der beiden Multikollektortransistoren (T5, T1) ein erster Kollektor mit dem Schaltsteuereingang je einer ersten (T2, T6) der beiden Schaltereinrichtungen (T2, T4, T6, T8) der beiden Brückenzweige und ein zweiter Kollektor über je einen Inverter, insbesondere in Form eines Invertertransistors (T7, T3), mit dem Schaltsteuereingang je einer zweiten (T4, T8) der beiden Schaltereinrichtungen (T2, T4, T6, T8) eines jeden Brückenzweiges verbunden ist.

4. Steuerschaltung nach Anspruch 3,
**dadurch gekennzeichnet,**
daß von jedem der beiden Multikollektortransistoren (T5, T1) ein dritter Kollektor mit dem Ausgang desjenigen Inverters (T7, T3) verbunden ist, dessen Eingang an den zweiten Kollektor des je anderen Multikollektortransistors (T5, T1) angeschlossen ist.

5. Steuerschaltung nach Anspruch 1 oder 2,
**dadurch gekennzeichnet,**

daß die Steuerlogik einen ersten (T5) und einen zweiten (T1) Multikollektortransistor aufweist,

daß von jedem der beiden Multikollektortransistoren (T5, T1) ein erster Kollektor mit dem Schaltsteuereingang je einer ersten (T2, T6) der beiden Schaltereinrichtungen (T2, T4, T6, T8) der beiden Brückenzweige verbunden ist,

wobei bei jedem der beiden Multikollektortransistoren (T5, T1) der Basisanschluß einerseits mit einem zweiten Kollektor dieses Multikollektortransistors (T5, T1) und andererseits über einen Zusatztransistor (T10, T9) mit dem Schaltsteuereingang je einer zweiten (T4, T8) der beiden Schaltereinrichtung (T2, T4, T6, T8) des je anderen Brückenzweiges verbunden ist,

daß an den nicht mit dem jeweiligen Multikollektortransistor (T5, T1) angeschlossenen Hauptstreckenanschluß eines jeden Zusatztransistors (T12, T9) der Ausgang eines Inverters, insbesondere in Form eines Invertertransistors (T7, T3) angeschlossen ist, dessen Eingangsanschluß über eine Vorschaltereinrichtung, insbesondere in Form eines Vortransistors (T11, T12) angeschlossen ist

und daß die Steueranschlüsse der beiden Zusatztransistoren (T10, T9) und die Steueranschlüsse der beiden Vorschaltereinrichtungen (T11, T12) mit je einem der beiden Steuerlogikeingänge (LDI1, LDI2) verbunden sind.

6. Steuerschaltung nach einem der vorstehenden Ansprüche, dadurch gekennzeichnet, daß jeder der Hysteresekomparatoren (HC1, HC2) eine umschaltbare Stromspiegelstufe (CM) aufweist, wobei die Stromspiegelstufe (CM) ihren Schaltzustand in Abhängigkeit vom Ausgangssignal des Hysteresekomparators (HC1, HC2) verändert.

7. Steuerschaltung nach Anspruch 6, dadurch gekennzeichnet, daß die Stromspiegelstufe (CM) einen Multiemittertransistor ($T_{104}$) aufweist, wobei die Anzahl der Emitter des Multiemittertransistors ($T_{104}$), durch die ein Strom geführt wird, in Abhängigkeit vom Schaltzustand des Stromspiegels (CM) verändert wird.

8. Steuerschaltung nach einem der Ansprüche 1 bis 7, dadurch gekennzeichnet, daß jeder der Hysteresekomparatoren (HC1, HC2)

- einen emittergekoppelten Differenzverstärker mit einem ersten Zweig und einem zweiten Zweig, einen mit einem Steuereingang versehenen steuerbaren Stromspiegel (CM) und eine Stromspiegelschaltsteuereinrichtung (T106) aufweist,

wobei

- der erste Zweig die Emitter-Kollektor-Strecke eines ersten Transistors (T102) und der zweite Zweig die Emitter-Kollektor-Strecke eines zweiten Transistors (T101) umfaßt,
- mindestens ein Zweig im Emitterstromkreis des zugehörigen Transistors (T101, T102) einen in Reihe geschalteten Zusatzwiderstand (R101) aufweist, wobei dessen Widerstandswert bzw. die Differenz der Widerstandswerte der Zusatzwiderstände in den beiden Emitterstromkreisen den Betrag einer Offset-Spannung des Hysteresekomparators (HC1, HC2) beeinflußt,
- der erste Transistor (T102) und der zweite Transistor (T101) kollektorseitig an den steuerbaren Stromspiegel (CM) geschaltet sind, und zwischen einen Ausgang des Stromspiegels (CM) und einen Ausgang (HCOUT) des Hysteresekomparators (HC1, HC2) ein Auskoppeltransistor (T105) geschaltet ist,
- dessen Basis an den Kollektor des ersten Transistors (T102) geschaltet ist, dessen Emitter auf einem Bezugspotential (GND) liegt und dessen Kollektor einerseits mit einem Ausgang (HCOUT) des Hysteresekomparators (HC1, HC2) gekoppelt und andererseits an den Steuereingang des steuerbaren Stromspiegels (CM) geschaltet ist.

9. Steuerschaltung nach Anspruch 8,
   **dadurch gekennzeichnet,**
   daß unter Weglassung des Auskoppeltransistors (T105) der Steuereingang des steuerbaren Stromspiegels (CM) an den Ausgang (HCOUT) des Hysteresekomparators (HC1 bzw. HC2) angeschlossen ist.

10. Steuerschaltung nach Anspruch 8 oder 9, dadurch gekennzeichnet, daß der steuerbare Stromspiegel (CM) einen als Diode geschalteten Diodentransistor (T103) und einen Multiemittertransistor (T104) aufweist, wobei

- mindestens einer der Emitter des Multiemittertransistors (T104) unmittelbar auf das Bezugspotential (GND) gelegt ist, und
- mindestens ein weiterer Emitter des Multiemittertransistors (T104) über eine steuerbare StromspiegelSchaltereinrichtung (T106) entweder offen oder auf das Bezugspotential (GND) geschaltet ist.


## Claims

1. A control circuit, in particular for a direct current motor control in positioning systems, comprising

- an input stage (1) having hysteresis-type comparators (HC1, HC2) adapted to have control signals applied thereto,

- a control logic (2) connected downstream of said input stage (1),

- and a driver stage (3) connected downstream of said control logic (2),

**characterized** in
that the input stage comprises:

- a differential input having a first input terminal (IN1) and a second input terminal (IN2),

- and two offset-type hysteresis comparators (HC1, HC2) each having a first comparator input (HC1-, HC2-), a second comparator input (HC1+, HC2+) and a comparator output (HC1$_0$, HC2$_0$),

- said offset-type hysteresis comparators (HC1, HC2) each having a differential input configuration,

- and each of said comparators (HC1, HC2) having one (HC1-, HC2+) of said two comparator inputs (HC1-, HC1+, HC2-, HC2+) connected to one (IN1) of said two input terminals (IN1, IN2) and the other one (HC1+, HC2-) of said two comparator inputs (HC1-, HC1+, HC2-, HC2+) connected to the other one (IN2) of said two

10

input terminals (IN1, IN2),

- and the comparator inputs (HC1-, HC1+, HC2-, HC2+) of said two comparators (HC1, HC2) furthermore being connected to each other such that the inverting comparator input (HC1-) of the first comparator (HC1) is connected to the non-inverting comparator input (HC2+) of the second comparator (HC2) and the non-inverting comparator input (HC1+) of the first comparator (HC1) is connected to the inverting comparator input (HC2-) of the second comparator (HC2),

- that the control logic (2) has two control logic inputs (LDI1, LDI2) connected to one of said comparator outputs (HC1$_o$, HC1$_o$) each,

- that the control circuit comprises two control circuit outputs (OUT1, OUT2),

- and that the relationship between the state of the first control logic input "LDI$_1$" and the second control logic input "LDI$_2$" and the state of the first control circuit output "OUT1" and the second control circuit output "OUT2" is established either by the following table, in which "0" stands for a first electrical voltage potential, "1" for a second electrical voltage potential, "V$_S$" for a potential corresponding substantially to a supply voltage, and "GND" for a reference potential, and wherein "TS" indicates that the respective output is in a high-impedance, floating condition with respect to its potential:

| LDI1: | 1 | 0 | 0 | 1 |
|-------|-----|-----|-----|-----|
| LDI2: | 0 | 0 | 1 | 1 |
| OUT1: | GND | V$_S$ | V$_S$ | TS |
| OUT2: | V$_S$ | V$_S$ | GND | TS |

or that the relationship between the state of the first control logic input "LDI$_1$" and the second control logic input "LDI$_2$" of the control logic (2) and the state of the first control logic output "OUT1" and the second control logic output "OUT2" is established by the following table, in which "0" stands for a first electrical voltage potential, "1" for a second electrical voltage potential, "V$_S$" for a potential corresponding substantially to a supply voltage, and "GND" for a reference potential, and wherein "TS" indicates that the respective output is in a high-impedance, floating condition with respect to its potential:

| LDI1: | 0 | 1 | 1 | 0 |
|-------|-----|-----|-----|-----|
| LDI2: | 1 | 1 | 0 | 0 |
| OUT1: | GND | V$_S$ | V$_S$ | TS |
| OUT2: | V$_S$ | V$_S$ | GND | TS |

2. A control circuit according to claim 1, characterized in

that the driver stage comprises a bridge circuit having a first bridge branch (T2, T4) and a second bridge branch (T6, T8),

that each bridge branch comprises a series connection of two switch means, in particular in the form of switching transistors (T2 T4, T6, T8), having one switching control input each, said series connection being connected between the two poles (VS, GND) of a biasing source,

and in that the connecting node between said two switch means (T2, T4) of one bridge branch is connected to the one control circuit output (OUT1) and the connecting node between said two switch means (T6, T8) of the other bridge branch is connected to the other control circuit output (OUT2).

3. A control circuit according to claim 1 or 2,
characterized in

that said control logic (2) comprises a first (T5) and a second (T1) multi-collector transistor,

the base terminals of said two multi-collector transistors (T5, T1) being connected to one of said two control logic inputs (LDI1, LDI2) each,

and each of said two multi-collector transistors (T5, T1) having a first collector connected to the switching control input of a respective first one (T2, T6) of said two switch means (T2, T4, T6, T8) of the two bridge branches, and having a second collector connected, each via an inverter, in particular in the form of an inverter transistor (T7, T3), to the switching control input of a respective second one (T4, T8) of said two switch means (T2, T4, T6, T8) of each bridge branch.

4. A control circuit according to claim 3,
characterized in
that each of said two multi-collector transistors (T5, T1) has a third collector connected to the output of that inverter (T7, T3) whose input is connected to the second collector of the respective other multi-collector transistor (T5, T1).

5. A control circuit according to claim 1 or 2,
characterized in

that the control logic comprises a first (T5) and a second (T1) multi-collector transistor,

that each of said two multi-collector transistors (T5, T1) has a first collector connected to the switching control input of a respective first one (T2, T6) of said two switch means (T2, T4, T6, T8) of said two bridge branches,

each of said two multi-collector transistors (T5, T1) having the base terminal connected on the one hand to a second collector of this multi-collector transistor (T5, T1) and on the other hand via an additional transistor (T10, T9) to the switching control input of a respective second one (T4, T8) of said two switch means (T2, T4, T6, T8) of the respective other bridge branch,

that the main path terminal of each additional transistor (T12, T9), which is not connected to the respective multi-collector transistor (T5, T1), has the output of an inverter, in particular in the form of an inverter transistor (T7, T3) connected thereto, which has its input terminal connected via a pre-switch means, in particular in the form of a pretransistor (T11, T12),

and in that the control terminals of said two additional transistors (T10, T9) and the control terminals of said two pre-switch means (T11, T22) are each connected to one of said two control logic inputs (LDI1, LDI2).

6. A control circuit according to any one of the preceding claims,
characterized in that each of said hysteresis comparators (HC1, HC2) comprises a switchable current mirror stage (CM), with said current mirror stage (CM) changing its switching state in response to the output signal of said hysteresis comparator (HC1, HC2).

7. A control circuit according to claim 6,
characterized in that said current mirror stage (CM) comprises a multi-emitter transistor ($T_{104}$), with the number of the emitters of said multi-emitter transistor ($T_{104}$) through which current is passed being changed as a function of the switching state of the current mirror (CM).

8. A control circuit according to any one of claims 1 to 7,
characterized in

- that each of said hysteresis comparators (HC1, HC2) comprises an emitter-coupled differential amplifier having a first branch and a second branch, a current mirror (CM) provided with a control input, and a current mirror switching control means (T106),

- with said first branch comprising the emitter-collector path of a first transistor (T102) and said second branch comprising the emitter-collector path of a second transistor (T101),

- at least one branch in the emitter circuit of the associated transistor (T101, T102) having a series-connected additional resistor (R101), with the resistance thereof or, respectively, the difference between the resistances of the additional resistors in the two emitter circuits having an effect on the value of an offset voltage of the hysteresis comparator (HC1, HC2),

- said first transistor (T102) and said second transistor (T101) being connected on the collector sides to the controllable current mirror (CM), and a decoupling transistor (T105) being connected between an output of the current mirror (CM) and an output (HCOUT) of the hysteresis comparator (HC1, HC2),

- the base of said decoupling transistor (T105) being connected to the collector of said first transistor (T102), the emitter thereof being at a reference potential (GND) and the collector thereof being coupled on the one hand to an output (HCOUT) of said hysteresis comparator (HC1, HC2) and being connected on the other hand to the control input of said controllable current mirror (CM).

9. A control circuit according to claim 8,
   characterized in that, omitting said decoupling transistor (T105), the control input of said controllable current mirror (CM) is connected to the output (HCOUT) of said hysteresis comparator (HC1 and HC2, respectively).

10. A control circuit according to claim 8 or 9,
    characterized in that said controllable current mirror (CM) comprises a diode transistor (T103) connected as a diode, as well as a multi-emitter transistor (T104),

    - at least one of the emitters of said multi-emitter transistor (T104) being applied directly to said reference potential (GND), and
    - at least one additional emitter of said multi-emitter transistor (T104), via a controllable current mirror switch means (T106), being either open or connected to said reference potential (GND).

**Revendications**

1. Circuit de commande, notamment pour commander un moteur à courant continu dans des systèmes de positionnement, comprenant :

   - un étage d'entrée (1) comportant des comparateurs à hystérésis (HC1, HC2) susceptibles de recevoir des signaux de commande,
   - une logique de commande (2) connectée en aval de l'étage d'entrée (1), et
   - un étage de commande (3) connecté en aval de la logique de commande (2),

     caractérisé en ce que l'étage d'entrée comprend :

   - une entrée différentielle comportant une première borne d'entrée (IN1) et une deuxième borne d'entrée (IN2), et
   - deux comparateurs (HC1, HC2) à hystérésis et à décalage, comportant chacun une première entrée de comparateur (HC1-, HC2-), une deuxième entrée de comparateur (HC1+, HC2+) et une sortie de comparateur (HC1$_o$, HC2$_o$),
   - les comparateurs (HC1, HC2) à hystérésis et à décalage ayant, chacun, une configuration d'entrée différentielle, et
   - pour chaque comparateur (HC1, HC2), l'une (HC1-, HC2+) des deux entrées de comparateur (HC1-, HC1+, HC2-, HC2+) étant reliée à l'une (IN1) des deux bornes d'entrée (IN1, IN2), et l'autre (HC1+, HC2-) des deux entrées de comparateur (HC1-, HC1+, HC2-, HC2+) étant reliée à l'autre (IN2) des deux bornes d'entrée (IN1, IN2), et
   - les entrées (HC1-, HC+, HC2-, HC2+) des deux comparateurs (HC1, HC2) étant en outre reliées les unes aux autres de manière que l'entrée inverseuse (HC1-) du premier comparateur (HC1) soit reliée à l'entrée non-inverseuse (HC2+) du deuxième comparateur (HC2) et l'entrée non-inverseuse (HC1+) du premier comparateur (HC1) soit reliée à l'entrée inverseuse (HC2-) du deuxième comparateur (HC2),
   - en ce que la logique de commande (2) comporte deux entrées de logique de commande (LDI1, LDI2), chacune

13

reliée à l'une des sorties de comparateur (HC1$_o$, HC2$_o$),

- en ce que le circuit de commande comporte deux sorties de circuit de commande (OUT1, OUT2), et
- en ce que, soit la relation entre l'état de la première entrée de la logique de commande "LDI$_1$" ainsi que de la deuxième entrée de la logique de commande "LDI$_2$" et l'état de la première sortie du circuit de commande "OUT1" ainsi que de la deuxième sortie du circuit de commande "OUT2" est fournie par la table suivante, dans laquelle "0" désigne un premier potentiel électrique, "1" désigne un deuxième potentiel électrique, "V$_S$" désigne un potentiel correspondant essentiellement à une tension d'alimentation, et "GND" désigne un potentiel de référence, et dans laquelle "TS" indique que la sortie correspondante se trouve à un état de haute impédance et de flottement par rapport à son potentiel :

| LDI1 : | 1 | 0 | 0 | 1 |
|---|---|---|---|---|
| LDI2 : | 0 | 0 | 1 | 1 |
| OUT1 : | GND | V$_S$ | V$_S$ | TS |
| OUT2 : | V$_S$ | V$_S$ | GND | TS |

soit la relation entre l'état de la première entrée "LDI$_1$" de la logique de commande (2) ainsi que de la deuxième entrée "LDI$_2$" de la logique de commande et l'état de la première sortie du circuit de commande "OUT1" ainsi que de la deuxième sortie du circuit de commande "OUT2" est fournie par la table suivante, dans laquelle "0" désigne un premier potentiel électrique, "1" désigne un deuxième potentiel électrique, "V$_S$" désigne un potentiel correspondant essentiellement à une tension d'alimentation, et "GND" désigne un potentiel de référence, et dans laquelle "TS" indique que la sortie correspondante se trouve à un état de haute impédance et de flottement par rapport à son potentiel :

| LDI1 : | 0 | 1 | 1 | 0 |
|---|---|---|---|---|
| LDI2 : | 1 | 1 | 0 | 0 |
| OUT1 : | GND | V$_S$ | V$_S$ | TS |
| OUT2 : | V$_S$ | V$_S$ | GND | TS |

2. Circuit de commande selon la revendication 1, caractérisé en ce que

l'étage de commande est un montage en pont comportant une première branche de pont (T2, T4) et une deuxième branche de pont (T6, T8),
chaque branche de pont comprend une connexion en série entre les deux pôles (VS, GND) d'une source de tension d'alimentation de deux dispositifs de commutation, notamment sous la forme de transistors de commutation (T2, T4, T6, T8), comprenant chacun une entrée de commande de commutation, et
le point de connexion entre les deux dispositifs de commutation (T2, T4) de l'une des branches de pont est relié à l'une des sorties (OUT1) du circuit de commande et le point de connexion entre les deux dispositifs de commutation (T6, T8) de l'autre branche de pont est relié à l'autre sortie (OUT2) du circuit de commande.

3. Circuit de commande selon la revendication 1 ou 2, caractérisé en ce que

la logique de commande (2) comprend un premier (T5) et un deuxième (T1) transistor à collecteurs multiples, les bornes de base des transistors à collecteurs multiples (T5, T1) sont reliées, chacune, à l'une des deux entrées (LDI1, LDI2) de la logique de commande, et
pour chacun des deux transistors à collecteurs multiples (T5, T1), un premier collecteur est relié à l'entrée de commande de commutation d'un premier (T2, T6) des deux dispositifs de commutation (T2, T4, T6, T8) de l'une respective des deux branches de pont, et un deuxième collecteur est relié par un inverseur, notamment sous la forme d'un transistor inverseur (T7, T3), à l'entrée de commande de commutation d'un deuxième (T4, T8) des deux dispositifs de commutation (T2, T4, T6, T8) de la branche de pont respective.

4. Circuit de commande selon la revendication 3, caractérisé en ce que, pour chacun des deux transistors à collecteurs multiples (T5, T1), un troisième collecteur est relié à la sortie de celui des inverseurs (T7, T3) dont l'entrée est reliée au deuxième collecteur de l'autre transistor à collecteurs multiples (T5,T1).

5. Circuit de commande selon la revendication 1 ou 2, caractérisé en ce que

la logique de commande comprend un premier (T5) et un deuxième (T1) transistor à collecteurs multiples, pour chacun des deux transistors à collecteurs multiples (T5, T1). un premier collecteur est relié à l'entrée de commande de commutation d'un premier (T2, T6) des deux dispositifs de commutation (T2, T4, T6, T8) de l'une respective des deux branches de pont,
pour chacun des deux transistors à collecteurs multiples (T5, T1), la base est reliée, d'une part, à un deuxième collecteur de ce transistor à collecteurs multiples (T5, T1) et, d'autre part, par l'intermédiaire d'un transistor supplémentaire (T10, T9), à l'entrée de commande de commutation d'un deuxième (T4, T8) des deux dispositifs de commutation (T2, T4, T6, T8) de l'autre branche de pont respective,
la borne principale non reliée au transistor à collecteurs multiples correspondant (T5, T1) de chacun des transistors supplémentaires (T10, T9) est reliée à la sortie d'un inverseur, notamment sous la forme d'un transistor inverseur (T7, T3) dont la borne d'entrée est reliée à un dispositif de commutation préalable, notamment sous la forme d'un transistor préalable (T11, T12), et
les bornes de commande des deux transistors supplémentaires (T10, T9) et les bornes de commande des deux dispositifs de commutation préalables (T11, T12) sont reliées, chacune, à l'une des deux entrées de la logique de commande (LDI1, LDI2).

6. Circuit de commutation selon l'une quelconque des revendications précédentes, caractérisé en ce que chacun des comparateurs à hystérésis (HC1, HC2) comprend un étage miroir de courant commutable (CM), l'étage miroir de courant (CM) changeant d'état de commutation en fonction du signal de sortie du comparateur à hystérésis (HC1, HC2).

7. Circuit de commande selon la revendication 6, caractérisé en ce que l'étage miroir de courant (CM) comprend un transistor à émetteurs multiples ($T_{104}$), le nombre d'émetteurs du transistor à émetteurs multiples ($T_{104}$) qui fournissent un courant étant modifié en fonction de l'état de commutation du miroir de courant (CM).

8. Circuit de commande selon l'une quelconque des revendications 1 à 7, caractérisé en ce que chacun des comparateurs à hystérésis (HC1, HC2) comprend un amplificateur différentiel à émetteurs couplés comportant une première branche et une deuxième branche, un miroir de courant commandé (CM) muni d'une entrée de commande, et un dispositif de commande de commutation de miroir de courant (T106),

la première branche étant constituée par la région émetteur-collecteur d'un premier transistor (T102) et la deuxième branche étant constituée par la région émetteur-collecteur d'un deuxième transistor (T101),
au moins une branche comprenant, dans le circuit du courant d'émetteur du transistor correspondant (T101, T102), une résistance série (R101) dont la valeur, ou la valeur différentielle des résistances dans les deux circuits de courant des émetteurs, influence la valeur d'une tension de décalage du comparateur à hystérésis (HC1, HC2),
le premier transistor (T102) et le deuxième transistor (T101) étant reliés par leurs collecteurs au miroir de courant commandé (CM), un transistor de sortie (T105) étant relié entre une sortie du miroir de courant (CM) et une sortie (HCOUT) du comparateur à hystérésis (HC1, HC2),
la base du transistor de sortie étant reliée au collecteur du premier transistor (T102), son émetteur étant mis à un potentiel de référence (GND), et son collecteur étant relié, d'une part, à une sortie (HCOUT) du comparateur à hystérésis (HC1, HC2) et, d'autre part, à l'entrée de commande du miroir de courant commandé (CM).

9. Circuit de commande selon la revendication 8, caractérisé en ce que, en omettant le transistor de sortie (T105), l'entrée de commande du miroir de courant commandé (CM) est reliée à la sortie (HCOUT) du comparateur à hystérésis (HC1, HC2).

10. Circuit de commande selon la revendication 8 ou 9, caractérisé en ce que le miroir de courant commandé (CM) comprend un transistor connecté en diode (T103) et un transistor à émetteurs multiples (T104),

- au moins un des émetteurs du transistor à émetteurs multiples (T104) étant mis directement au potentiel de référence (GND), et
- au moins un autre émetteur du transistor à émetteurs multiples (T104) étant connecté, par un dispositif de commutation du miroir de courant (T106), soit à l'état ouvert, soit au potentiel de référence (GND).

Fig. 1

EP 0 725 996 B1

Fig. 2A

| ÜBERTRAGUNGSFUNKTION   ZU   Fig. 2A | | | | |
|---|---|---|---|---|
| $HC1_0$ | 1 | 0 | 0 | 1 |
| $HC2_0$ | 0 | 0 | 1 | 1 |
| OUT 1 | 0 | 1 | 1 | T S |
| OUT 2 | 1 | 1 | 0 | T S |
| OUT 1 - OUT 2 | − | 0 | + | T S |

Fig. 2B

| ÜBERTRAGUNGSFUNKTION ZU Fig. 2B | | | | |
|---|---|---|---|---|
| $HC1_0$ | 0 | 1 | 1 | 0 |
| $HC2_0$ | 1 | 1 | 0 | 0 |
| OUT 1 | 0 | 1 | 1 | T S |
| OUT 2 | 1 | 1 | 0 | T S |
| OUT 1 − OUT 2 | − | 0 | + | T S |

Fig. 3

EP 0 725 996 B1

# Fig. 4

Fig. 5

EP 0 725 996 B1

# Fig. 6

EP 0 725 996 B1

# Fig. 7

EP 0 725 996 B1

Fig. 8

# Fig. 9

Fig. 10

EP 0 725 996 B1

Fig. 11

$V_M = V_{OUT1} - V_{OUT2}$

$V^+$

$V_{dn-}$    $V_{dp-}$

$V_{dp+}$    $V_{dn+}$

$\overline{V_{dIN}}$

$V^-$    $V_{dP}$    $V_{dN}$

HYSTERESE    OFFSET    OFFSET    HYSTERESE